# EUROPEAN PATENT APPLICATION

(11) **EP 2 949 570 A1**
(43) Date of publication of application: **02.12.2015**
(21) Application number: 14743624.0
(22) Date of filing: 27.01.2014
(51) Int. Cl.: B63H 5/16, B63B 1/32, B63H 5/07

(54) **SHIP WITH SMALL DUCT AND METHOD FOR ASSESSING APPLICATION OF SMALL DUCT ON SHIP**

(30) Priority: 25.01.2013 JP 2013012663
(71) Applicant: National Maritime Research Institute, Mitaka-shi, Tokyo 181-0004 (JP)
(72) Inventor: SASAKI, Noriyuki, Mitaka-shi Tokyo 181-0004 (JP); KAWASHIMA, Hideki, Mitaka-shi Tokyo 181-0004 (JP); FUJISAWA, Junichi, Mitaka-shi Tokyo 181-0004 (JP); KUME, Kenichi, Mitaka-shi Tokyo 181-0004 (JP); ICHINOSE, Yasuo, Mitaka-shi Tokyo 181-0004 (JP)
(74) Representative: Körfer, Thomas
(86) International application number: PCT/JP2014/000404
(87) International publication number: WO 2014/115567

(57) **Abstract**

A ship setting a small duct of the present invention includes a propeller 10 and a duct 20, a propeller load condition of the ship's hull 1 in an actual sea is set to 1.0 or more and a vortex resistance of the ship's hull 1 in the actual sea is set to 10% or more, the duct 20 is a small duct, and a diameter Ddin of the duct 20 is set to 20% or more and 50% or less of a diameter Dp of the propeller 10. According to this, in an actual sea where a propeller loading is increased, cavitation is suppressed, and a load distribution of the propeller 10 in its radial direction which governs efficiency is optimized by using interference with respect to the small duct 20.

## Description

### [TECHNICAL FIELD]

The present invention relates to a ship setting a small duct including a propeller which is mounted on a stern of a ship's hull and a duct which is provided in front of the propeller.

### [BACKGROUND TECHNIQUE]

As conventional ducts provided in the vicinity of a propeller, there exist a large duct which covers the propeller and which has a diameter larger than that of the propeller, and an intermediate duct having a diameter slightly smaller than that of the propeller and placed in front of the propeller.

The large duct covering the propeller is called a ducted propeller, and the large duct is handled as a propulsor which is effective when the large duct is integrally formed on the propeller and a propeller loading is high. This is because that interference between the propeller and the duct is large, and it is more rational to handle, as a propulsor, performance into which this interference is taken.

On the other hand, the intermediate duct placed in front of the propeller and having a diameter slightly smaller than that of the propeller is handled as an energy-saving device and is not regarded as a propulsor. This is because that interference between the duct and the propeller is not so large, and interference between a ship's hull and the duct is larger than the former interference.

Therefore, in a performance test of the intermediate duct, a resistance test is carried out in a state where the duct is mounted on the ship's hull. This is based on recognition that the duct is part of the ship's hull.

Since the ducted propeller has large interference between the large duct and the propeller, efficiency of the ducted propeller is enhanced in an actual sea where a propeller loading increases but the ducted propeller has a problem of cavitation occurred on the inner duct surface, and the large duct is not employed for a large ship almost at all.

Patent document 1 discloses a ship including a propeller with a duct. This ship includes a propeller mounted on a stern of a ship' s hull, and an acceleration type duct mounted in front of the propeller, a diameter of the duct is in a range of 40 to 110% of that of the propeller, and a center of the duct matches with an axis of the propeller.

An inner diameter of this duct on its downstream side is smaller than an inner diameter of the duct on an upstream side. The duct has a strut on its inner surface. The strut functions as a fixed blade which forms, as a counterflow, a flow toward the propeller. The duct is mounted on, through the strut which is twisted in a direction opposite from a rotation direction of the propeller, a stern pipe of a ship's hull or an end of the ship's hull which covers the stern pipe.

Patent document 2 discloses a ship including a propeller with a duct. The ship includes a propeller mounted on a stern of a ship' s hull, and an acceleration type duct mounted in front of the propeller. A diameter of the duct is in a range of 40 to 70% of that of the propeller, and a center of the duct is inclined with respect to an axis of the propeller. An inner diameter of the duct on its downstream side is smaller than an inner diameter of the duct on an upstream side, and a cross sectional shape of the duct swells inward.

For the purpose of enhancing economic efficiency of an enlarged ship, attention is focused on hull efficiency, patent document 3 discloses that a duct is placed between a ship's hull and a propeller with respect to a region having a large wake coefficient caused by longitudinal vortex. Patent Document 3 is also close a conception of a large duct having a diameter which is about the same as that of the propeller. A shape of the duct as viewed from a lateral direction is asymmetric with respect to an axis of the duct(an axially asymmetric shape), but a cross sectional shape of the duct inwardly swells as a convex shape, and a projecting degree of an upstream side of this as the convex shape is greater than those of other portions.

Patent Document 4 discloses a duct. A shape of the duct as viewed from a side thereof is a substantially trapezoidal shape, i.e., an axially asymmetric shape, and a diameter of the duct is smaller than that of a propeller.

Patent Document 5 discloses a propulsor in which a pitch of a range of a blade root of a propeller is slightly larger, a pitch of a central portion is reduced, and a pitch of a blade tip is again increased.

Patent Document 6 discloses a propeller in which propeller pitch becomes the maximum at a blade root of the propeller, and becomes the minimum at a blade tip, i.e., the pitch is reduced in a radial direction of the propeller, i.e., the pitch is a decreasing pitch.

### [PRIOR ART DOCUMENT]

### [PATENT DOCUMENTS]

[Patent Document 1] Japanese Patent Application Laid-open No.H8-2486
[Patent Document 2] Japanese Patent Application Laid-open No.H9-175488
[Patent Document 3] Japanese Examined Utility Model Application, Publication No.S56-32396
[Patent Document 4] Japanese Patent Application Laid-open No.2007-331549
[Patent Document 5] Japanese Patent Application Laid-open No.H10-264890
[Patent Document 6] Japanese Patent Application Laid-open No.2010-95181

### [SUMMARY OF THE INVENTION]

### [PROBLEM TO BE SOLVED BY THE INVENTION]

However, since the intermediate duct placed in front of the propeller has weak interference with respect to the propeller, the above-described effect as that of the ducted propeller can not be expected so much in the actual sea where a propeller loading of the propeller is increased by wind and waves.

The intermediate duct disclosed in each of the Patent Documents does not optimize a load distribution of the propeller in a radial direction which governs efficiency using interference with respect to the duct. Further, the ducted propeller in which interference can be expected has the problem of cavitation, and it is difficult to employ the large duct in a large ship having a large diameter propeller.

According to Patent Document 5, since the pitch at the blade tip of the propeller is increased, cavitation in the blade tip of the propeller is increased.

On the other hand, a horsepower reduction effect in the actual sea is largely influenced not only by a relation between a propeller and a duct, but also by a ship shape.

Hence, it is an object of the present invention, to specify a ship shape which can obtain a horsepower reduction effect from a relation between a vortex resistance and a propeller load condition, as the energy-saving device having characteristics of both the large duct and the intermediate duct, to contrive a shape of the propeller, to place a small duct in front of and close to the propeller, to suppress cavitation in an actual sea where a propeller loading is increased while taking wake into account, and to optimize a load distribution of the propeller in a radial direction which governs efficiency using interference with respect to the small duct.

### [MEANS FOR SOLVING THE PROBLEM]

A first aspect of the present invention provides a ship setting a small duct includes a propeller mounted on a stern of a ship's hull and a duct provided in front of the propeller, wherein a propeller load condition of the ship's hull in an actual sea is set to 1.0 or more and a vortex resistance of the ship's hull in the actual sea is set to 10% or more, the duct is a small duct, and a diameter of the duct is set to 20% or more and 50% or less of a diameter of the propeller. According to this aspect, the diameter of the duct is set to 20% or more and 50% or less of that of the propeller. According to this, the duct can be brought close to the propeller without occurring cavitation. By applying the duct to a ship's hull having a propeller load condition of 1.0 or more and a vortex resistance of 10% or more such as a tanker, a bulk ship, an LPG ship and a PCC ship, a suction effect at the center portion of the propeller is enhanced in an actual sea where a propeller loading of the propeller is increased by wind and waves, and it is possible to optimize a load distribution of the propeller in the radial direction which governs efficiency using interference with respect to the duct. Further, according to this aspect, since the diameter of the duct is set to 20% or more and 50% or less of the diameter of the propeller, the total system of propulsor is small in size and light in weight, and has small friction resistance, low vibration, low noise and low cost, and it is possible to enhance the propulsive efficiency. The vortex resistance is viscosity resistance as resistance of the ship's hull, and is resistance caused by vortex generated by a ship shape other than friction resistance of the ship's hull surface. The expression " a vortex resistance is 00%" means a rate of the vortex resistance to the entire resistance of a hull.

The propeller load condition has the same meaning as the propeller loading, and this is a numeric value obtained by dividing thrust force generated by the propeller by [dynamic pressure of water flow × area of a propeller circular surface].

According to a second aspect of the invention, in the ship setting the small duct of the first aspect, the propeller load condition of the ship's hull is set to 3.5 or less, and the vortex resistance of the ship's hull is set to 15% or less. According to this aspect, in a ship's hull having a propeller load condition of 3.5 or less and a vortex resistance of 15% or less such as an LPG ship and a PCC ship, it is possible to obtain the horsepower reduction effect.

According to a third aspect of the invention, in the ship setting the small duct of the first or second aspect, a pitch of the propeller is set to a decreasing pitch which is reduced in a radial direction. According to the invention of the third aspect, the duct can be combined with the propeller of the decreasing pitch, and the duct can be brought close to the propeller without occurring the cavitation. Further, since the pitch of the propeller is a decreasing pitch, in the actual sea where a load degree of the propeller is increased by the wave and wind, it is possible to enhance the suction effect at the center portion of the propeller, and to optimize the radial load distribution of the propeller which governs efficiency utilizing interference with respect to the duct.

According to a fourth aspect of the invention, in the ship setting the small duct of the third aspect, a value of the pitch becomes a maximum value at a range of a blade root of the propeller, and a maximum value of the pitch is set to 120% or more and 160% or less of the minimum value of the pitch. According to this aspect, it is possible to suppress the cavitation occurred at the propeller blade tip, and it is possible to enhance the suction effect at the center portion of the propeller, and an optimal load distribution can be obtained.

According to a fifth aspect of the invention, in the ship setting the small duct of any one of the first to fourth aspects, a distance between a rear end of the duct and a front edge of the propeller is set to 0.5% or more and less than 10% of the diameter of the propeller. According to this aspect, the duct can be brought close to the propeller without generating separation caused by a relation with respect to the ship' s hull, and it is possible to enhance the interference effect between the duct and the propeller.

According to a sixth aspect of the invention, in the ship setting the small duct of any one of the first to fifth aspects, a cross sectional shape of the duct is formed as a convex shape which swells inward, a projecting degree of the convex shape is greater on an upstream side of the duct, and a camber ratio is set to 6% or more and 16% or less. According to this aspect, even if the camber ratio is set to 6% or more and 16% or less, separation is not generated, and it is possible to increase the lift force for driving the ship's hull forward as component force by the suction effect at the center portion of the propeller.

According to a seventh aspect of the invention, in the ship setting the small duct of any one of the first to sixth aspects, the duct is an acceleration type duct in which an inner diameter of the duct on its downstream side is smaller than an inner diameter of the duct on its upstream side. According to this aspect, it is possible to further enhance the suction effect at the center portion of the propeller and the lift force for driving the ship's hull forward as the component force.

According to an eighth aspect of the invention, in the ship setting the small duct of any one of the first to seventh aspects, a center line of the duct matches with a center line of the propeller. According to this aspect, it is possible to easily produce and install the duct and to inexpensively provide the duct, as compared with a duct which is asymmetric with respect to its axis, a duct which is installed such that a center shaft of the duct is offset from a propeller shaft, or a duct which is installed with inclination angle.

According to a ninth aspect of the invention, in the ship setting a small duct described in any one of the first to seventh aspects, a front portion of a center line of the duct is inclined from a center line of the propeller upward by 10° or less and downward by 5° or less. According to the invention of the ninth aspect, even if an axially symmetric duct which can relatively easily be produced is used, it is possible to obtain propulsion performance of almost the same level as the axially asymmetric duct in accordance with wake which differs depending upon each of hulls.

According to an tenth aspect of the invention, in the ship setting the small duct of any one of the first to ninth aspects, an inner surface of the duct has a fixed blade which forms a flow into the propeller as a counterflow. According to this aspect, a flow which flows into the duct flows into the propeller as counterflow by the fixed blade, and it is possible to further enhance the propulsive efficiency.

According to an eleventh aspect of the invention, in the ship setting a small duct of the tenth aspect, the fixed blade is twisted in a direction opposite from a rotation direction of the propeller. According to this aspect, by rotating the flow by the fixed blade, the propulsive efficiency is enhanced.

According to a twelfth aspect of the invention, in the ship setting a small duct of the eleventh aspect, a twisting angle of the fixed blade becomes larger toward the propeller. According to this aspect, the propulsive efficiency is further enhanced.

According to a thirteenth aspect of the invention, in the ship setting a small duct of the eleventh or twelfth aspect, a maximum twisting angle of the fixed blade is set to 15 times or more and 25 times or less of a pitch ratio of the propeller. According to the invention of the thirteenth aspect, a twisting of a flow at an outlet of the propeller can be reduced, and the propulsive efficiency is further enhanced.

According to a fourteenth aspect of the invention, in the ship setting the small duct of any one of the tenth to thirteenth aspects, a strut which mounts the duct on the stern also functions as the fixed blade, and the strut is twisted in a direction opposite from a rotation direction of the propeller. According to this aspect, the strut also functions as a fixed blade, and a structure is simplified.

According to a fifteenth aspect of the invention, in the ship setting the small duct described in any one of the first to fourteenth aspects, the duct is formed as a reversed trapezoidal shape in which its upper side is longer than its lower side as viewed from a side direction. According to this aspect, drag generated at a lower end of the duct can be reduced, and thrust force at an upper end of the duct can be enhanced.

According to a sixteenth aspect of the invention, in the ship setting the small duct of the fifteenth aspect, the upper side of the duct is set than one time and two times or less of a length of the lower side. According to this aspect, it is possible to enhance the suction effect at the center portion of the propeller while reducing the drag and enhancing the thrust force.

According to a seventeenth aspect of the invention, in the ship setting the small duct described in any one of the first to sixteenth aspects, the duct is mounted on an existing ship at a later stage. According to the invention of the seventeenth aspect, also in existing ships in addition to newly produced ships, it is possible to utilize the small duct which is small in size and light in weight, which has small friction resistance, low vibration, low noise and low cost, and which is capable of enhancing the propulsive efficiency.

A eighteenth aspect of the present invention provides a determination method for applying a small duct to a ship, a propeller load condition and a vortex resistance of the ship in an actual sea are calculated, or a predetermined kind of the ship is applied to a relation between the propeller load condition and the vortex resistance, and if the propeller load condition is 1.0 or more and the vortex resistance is 10% or more, the small duct is applied to the ship. According to this aspect, it is possible to obtain a horsepower reduction effect by applying the small duct from the propeller load condition and the vortex resistance.

### [EFFECT OF THE INVENTION]

According to the ship setting the small duct of the present invention, if the diameter of the duct is set to 20% or more and 50% or less of the diameter of the propeller, the duct can be brought close to the propeller without occurring cavitation, and by applying the duct to a ship's hull having a propeller load condition of 1.0 or more and a vortex resistance of 10% or more such as a tanker, a bulk ship, an LPG ship and a PCC ship, it is possible to enhance the suction effect at the center portion of the propeller in an actual sea where the propeller loading of the propeller is increased by wind and waves, the load distribution of the propeller in the radial direction which governs efficiency can be optimized by utilizing interference with respect to the duct.

According to the ship setting the small duct of the present invention, since the diameter of the duct is set to 20% or more and 50% or less of the diameter of the propeller, the propeller is small in size and light in weight, and has small friction resistance, low vibration, low noise and low cost, and it is possible to enhance the propulsive efficiency.

Further, if the propeller load condition of the ship's hull is set to 3.5 or less, and the vortex resistance of the ship's hull is set to 15% or less, in the LPG ship and the PCC ship, it is possible to obtain a horsepower reduction effect which cannot be expected in the conventional large duct and medium duct.

If the pitch of the propeller is set to the decreasing pitch which is reduced in the radial direction, the duct can be combined with the propeller of the decreasing pitch, and the duct can be brought close to the propeller without occurring the cavitation. In the actual sea where the load degree of the propeller is increased by wave and wind, it is possible to enhance the suction effect at the center portion of the propeller which governs efficiency, and to optimize the radial load distribution of the propeller utilizing interference with respect to the duct.

If a value of the pitch becomes a maximum value at a range of a blade root of the propeller, and the maximum value of the pitch is set to 120% or more and 160% or less of a minimum value, it is possible to suppress the cavitation occurred at the propeller blade tip, to enhance the suction effect at the center portion of the propeller, and to make the load distribution optimal.

If the distance between the rear end of the duct and the front edge of the propeller is set to 0.5% or more and less than 10% of the diameter of the propeller, it is possible to bring the duct close to the propeller without generating the separation caused by the suction effect of the decreasing pitch propeller, and to enhance the interference effect between the duct and the propeller.

If the cross sectional shape of the duct is formed as a convex shape which swells inward, the projecting degree of the convex shape is greater on the upstream side of the duct, and the camber ratio is set to 6% or more and 16% or less, even if the camber ratio is set to 6% or more and 16% or less, the separation is not generated and it is possible to increase the lift force of driving the ship's hull forward as the component force by the suction effect at the center portion of the propeller.

If the duct is made as an acceleration type duct which has a downstream inner diameter smaller than an upstream inner diameter, it is possible to further enhance the suction effect at the center portion of the propeller and the lift force for driving the ship's hull forward as the component force.

If the center of the duct and the axis of the propeller match with each other, it is possible to easily produce and install the duct and to inexpensively provide the duct, as compared with a duct which is asymmetric with respect to its axis, a duct which is installed such that a center shaft of the duct is offset from a propeller shaft, or a duct which is installed with inclination angle.

If a front portion of a center line of the duct is inclined from a center line of the propeller upward by 10° or less and downward by 5° or less, even if an axially symmetric duct which can relatively easily be produced is used, it is possible to obtain propulsion performance of almost the same level as the axially asymmetric duct.

If an inner surface of the duct has a fixed blade which forms a flow into the propeller as a counterflow, the flow which flows into the duct flows into the propeller by the fixed blade as the counterflow, and it is possible to further enhance the propulsive efficiency.

If the fixed blade is twisted in a direction opposite from a rotation direction of the propeller, by rotating the flow by the fixed blade, the propulsive efficiency is enhanced.

If a twisting angle of the fixed blade becomes larger toward the propeller, the propulsive efficiency is further enhanced.

If a maximum twisting angle of the fixed blade is set to 15 times or more and 25 times or less of a pitch ratio of the propeller, a twisting of a flow at an outlet of the propeller can be reduced, and the propulsive efficiency is further enhanced.

If a strut which mounts the duct on the stern also functions as the fixed blade the flow is rotated by the strut, the strut also functions as the fixed blade, and a structure is simplified.

If the duct is formed as a reversed trapezoidal shape in which its upper side is longer than its lower side as viewed from a side direction, drag generated at a lower end of the duct is reduced, and thrust force at an upper end of the duct can be enhanced.

If the upper side of the duct is set than one time and two times or less of a length of the lower side, it is possible to enhance the suction effect at the center portion of the propeller while reducing the drag and enhancing the thrust force.

If the duct is mounted on an existing ship at a later stage, also in existing ships in addition to newly produced ships, it is possible to utilize the small duct which is small in size and light in weight, which has small friction resistance, low vibration, low noise and low cost, and which is capable of enhancing the propulsive efficiency.

According to a determination method for applying a small duct to a ship of the present invention, a propeller load condition and a vortex resistance of the ship in an actual sea are calculated, or a predetermined kind of the ship is applied to a relation between the propeller load condition and the vortex resistance, and if the propeller load condition is 1.0 or more and the vortex resistance is 10% or more, the small duct is applied to the ship. According to this, by applying the small duct, it is possible to reliably obtain the horsepower reduction effect.

### [BRIEF DESCRIPTION OF THE DRAWINGS]

Fig. 1 is a schematic diagram showing a configuration of a ship with a ship setting a small duct according to an embodiment of the present invention;
Figs. 2 are partial sectional side view and a sectional view taken along a line A-A showing a small duct used for the ship;
Figs. 3 are partial sectional views showing a configuration of essential portions of another small duct used for the ship;
Fig. 4 is a graph showing pitch distributions of a decreasing pitch propeller and a normal propeller;
Fig. 5 is a graph showing flow speed distributions of the decreasing pitch propeller and the normal propeller;
Fig. 6 is a graph showing a flow speed distribution when a distance between a rear end of the duct and a front edge of the propeller is changed in the ship setting the small duct;
Fig. 7 is a graph showing a result of a propeller loading changing test in which decrease in speed of the ship during waves is simulated; and
Fig. 8 is a graph showing a result of a propeller loading changing test in which decrease in speed of the ship during waves is simulated.
Fig. 9 is a diagram showing a relation between a propeller load condition (Ct) and a vortex resistance (%) in an actual sea with respect to a ship's hull;
Fig. 10 is a diagram showing a relation of essential items depending upon kinds of ships;
Fig. 11 is a side view showing an essential portion of a ship setting the small duct according to another embodiment of the present invention;
Fig. 12 is a side view showing an essential portion of a ship setting the small duct according to another embodiment of the present invention; and
Fig. 13 is a side view showing an essential portion of a ship setting the small duct according to another embodiment of the present invention.

### [MODE FOR CARRYING OUT THE INVENTION]

A ship setting a small duct according to an embodiment of the present invention will be described below.

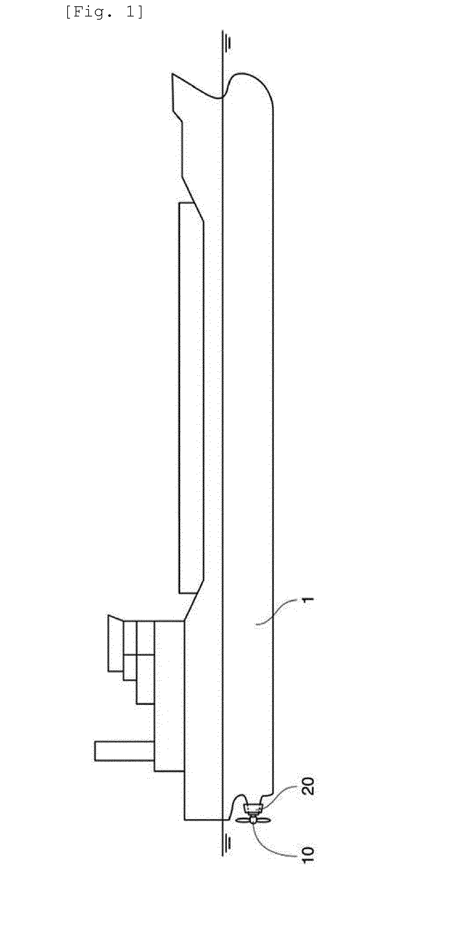

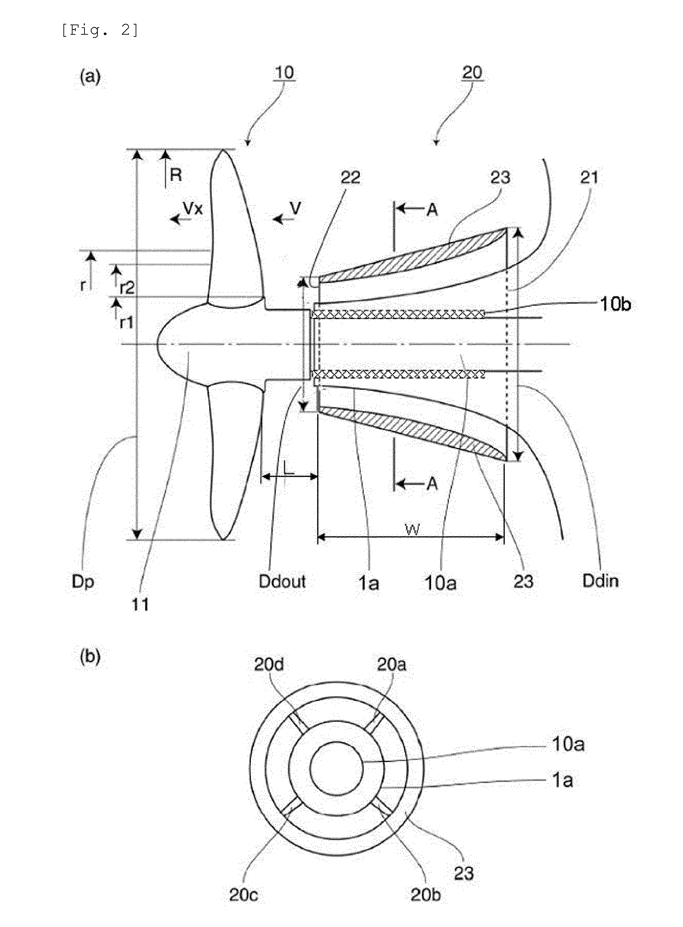

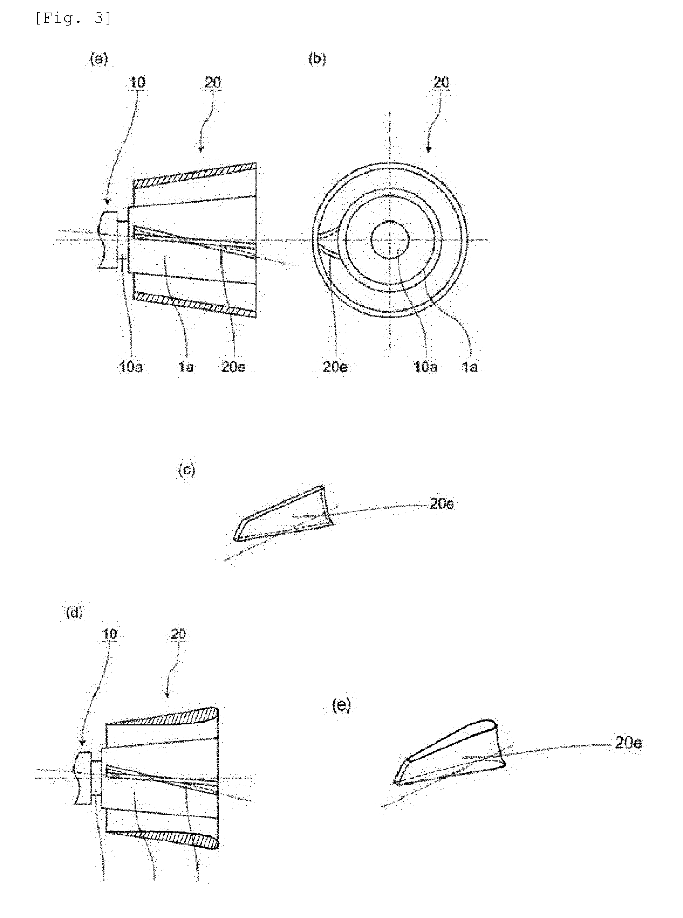

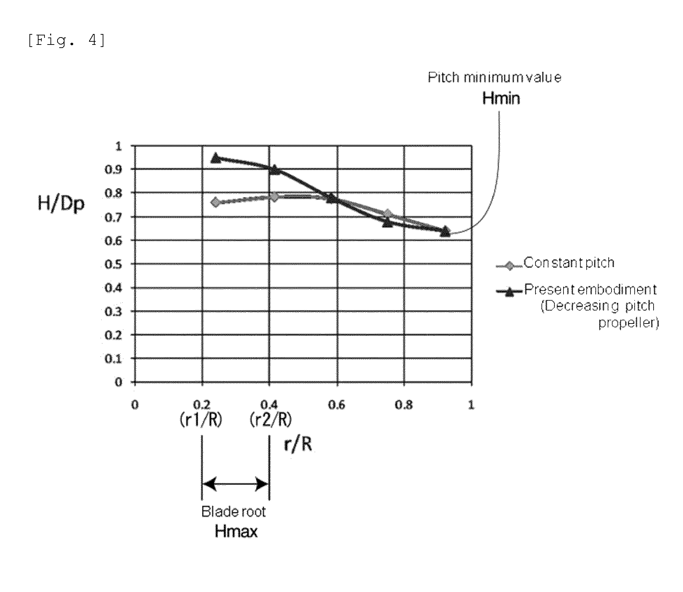

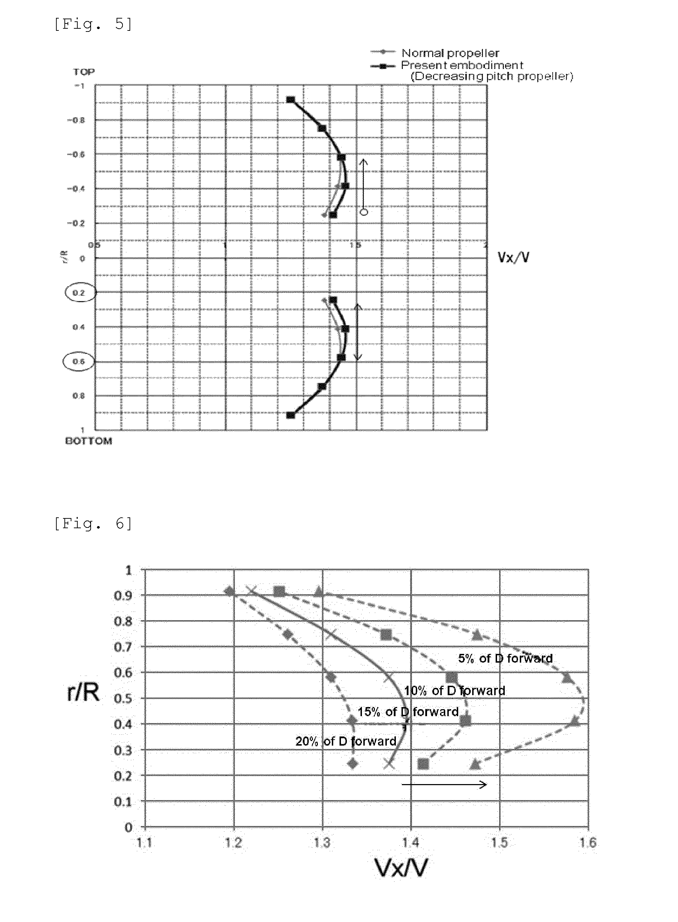

Fig. 1 is a schematic diagram showing a configuration of a ship with a ship setting a small duct according to the embodiment of the invention, Fig. 2 (a) is a partial sectional side view showing essential portions of a ship setting a small duct used for the ship, Fig. 2(b) is a sectional view taken along a line A-A in Fig. 2(a), Figs. 3 are partial sectional views showing a configuration of essential portions of another ship setting a small duct used for the ship, Fig. 4 is a graph showing pitch distributions of a decreasing pitch propeller and a normal propeller, Fig. 5 is a graph showing flow speed distributions of the decreasing pitch propeller and the normal propeller, and Fig. 6 is a graph showing a flow speed distribution generated by a distance between a rear end of the duct and a front edge of the propeller in the ship setting the small duct.

As shown in Fig. 1, the ship includes a propeller 10 mounted on a stern of a ship's hull 1, and a duct 20 mounted in front of the propeller 10.

The ship's hull 1 is a tanker, a bulk ship, an LPG ship or a PCC ship for example. A propeller load condition (Ct) in an actual sea is 1.0 or more and a vortex resistance is 10% or more.

As shown in Fig. 2(a), the propeller 10 is provided at its center portion with a boss 11. The duct 20 is an acceleration type duct in which an inner diameter of a rear end 22 located downstream is smaller than that of the front end 21 located upstream.

A cross sectional shape of the duct 20 swells inward as a convex shape 23, and a projecting degree of the convex shape 23 is greater on the upstream of the duct 20. A camber ratio in the maximum camber position is set to 6% or more and 16% or less. Generally, if the camber ratio exceeds 8 % , separation is generated in the duct 20, but the small duct 20 specified in the embodiment is provided in front of and close to the propeller 10, and a pitch of the propeller 10 is a decreasing pitch which reduces in the radial direction. Therefore, even if the camber ratio exceeds 8% by a suction effect at the center portion of the propeller 10, it is possible to increase a lift force without generating the separation. By making the duct 20 as the acceleration type duct and by swelling the cross sectional shape inwardly as the convex shape 23 to increase the camber ratio, it is possible to accelerate a flow, to increase interference with respect to the propeller 10, and to also increase the lift force which drives the ship's hull 1 forward as a component force.

A diameter of the propeller 10 is defined as Dp, a diameter of the front end 21 of the duct 20 is defined as Ddin, a diameter of the rear end 22 of the duct 20 is defined as Ddout and a distance between the front edge of the propeller 10 and the rear end 22 of the duct 20 is defined as L. It is preferable that the diameter Ddin of the front end 21 of the duct 20 is 50% or less of the diameter Dp of the propeller 10, the distance L between the rear end 22 of the duct 20 and the front edge of the propeller 10 is 15% or less or less than 10% of the diameter Dp of the propeller 10. It is preferable that the distance L between the rear end 22 of the duct 20 and the front edge of the propeller 10 is as short as possible, but to avoid contact between the duct 20 and the propeller 10, it is preferable that the distance L is set to 0.5% or more of the diameter Dp of the propeller 10.

The diameters Ddin and Ddout of the duct 20 are based on sizes measured from a contact between an outer surface and an inner surface when the front end and the rear end are formed as curved surfaces, but sizes measured from an outer end surface or an inner end surface of the front end and the rear end can also be used briefly.

The diameter Ddin of the front end 21 of the duct 20 and the diameter Ddout of the rear end 22 of the duct 20 are set to 20% or more and 50% or less of the diameter Dp of the propeller 10. In a range of 20% or more and 50% or less of the diameter Dp of the propeller 10, the duct 20 may be of a cylindrical shape in which the diameter Ddin of the front end 21 of the duct 20 and the diameter Ddout of the rear end 22 of the duct 20 are equal to each other. It is more preferable that the diameter Ddin of the front end 21 of the duct 20 is greater than the diameter Ddout of the rear end 22 of the duct 20. It is more preferable that the diameter Ddin of the front end 21 of the duct 20 is 35% or more and 50% or less of the diameter Dp of the propeller 10, and the diameter Ddout of the rear end 22 of the duct 20 is 20% or more and less than 40% of the diameter Dp of the propeller 10.

If the diameter Ddout and the diameter Ddin of the duct 20 is set to 20% or more and 50% or less of the diameter Dp of the propeller 10, the propeller 10 is small in size and light in weight, and has small friction resistance, low vibration, low noise and low cost, and it is possible to enhance the propulsive efficiency.

To enhance the interference effect and to prevent the duct from abutting against the stern and to prevent resistance from increasing, it is preferable that a width W (length) of the duct 20 is 20% or more and 60% or less of the diameter Dp. To widely apply the present invention to general ships including large ships, it is more preferable that the width W of the duct 20 is 25% or more and 50% or less of the diameter Dp.

As shown in Fig. 2 (a), the duct 20 is formed symmetrically with respect to its axis. Since the duct 20 is mounted such that a drive shaft 10a of the propeller 10 and a center shaft of the duct 20 match with each other, it is possible to easily produce and install the duct 20 and to inexpensively provide the duct 20 as compared with a duct which is asymmetric with respect to its axis, a duct which is installed such that a center shaft of the duct is offset from a propeller shaft, or a duct which is installed with inclination angle.

As shown in Fig. 2(b), the duct 20 is mounted on a ship's hull end 1a which covers a stern tube 10b by struts 20a, 20b, 20c and 20d. The stern tube 10b is provided around the drive shaft 10a of the propeller 10. In the case of a ship whose stern tube 10b is exposed, the duct 20 may be mounted directly on the stern tube 10b by the struts 20a, 20b, 20c and 20d. In the case of a ship whose stern tube 10b is partially exposed, the duct 20 may be mounted on both the stern tube 10b and the ship's hull end 1a by the struts 20a, 20b, 20c and 20d.

If the duct 20 is mounted on the stern tube 10b of the ship's hull 1 or the ship's hull end 1a which covers the stern tube 10b through the struts 20a, 20b, 20c and 20d, it is possible to take in a flow from the entire of a front opening, to enhance the interference with respect to the propeller 10, to enhance the efficiency, and to easily retrofit the duct 20. This configuration has a merit when the duct 20 is retrofitted on an existing ship, but when the duct 20 is mounted on a new ship also, there is a merit because it is unnecessary to machine an outer plate of the ship's hull 1 unlike the conventional technique.

The struts 20a, 20b, 20c and 20d are radially connected to the center shaft of the duct 20 and especially, an angle between the struts 20a and 20d is set smaller than an angle between the struts 20b and 20c. According to this configuration, a wake distribution can be enhanced.

It is preferable that the minimum number of the struts is two and the maximum number is five, and it is possible to provide more struts outside the duct 20.

A cross section of a flow path of the duct 20 is configured such that the diameter Ddout of the rear end 22 is smaller than the diameter Ddin of the front end 21. If the cross section of a flow path of the duct 20 is narrowed toward the downstream, it is possible to enhance the wake distribution. To narrow the flow path cross section of the duct 20, it is possible to increase the cross sectional areas of the struts 20a, 20b, 20c and 20d toward the downstream instead of narrowing an inner cross section of the duct 20. By enhancing the wake distribution, it is possible to further enhance the propeller efficiency by the small duct 20.

As shown in Figs. 3(a) to 3(c), it is also possible to provide a strut 20e having a twist on an inner surface of the duct 20, and to form a flow toward the propeller 10 as a counterflow. In this case, it is preferable that a mounting angle with respect to a center line of the ship's hull is 5° to 25° on the stern tube side θs, and is 5° to 10° on the inner surface side θd of the duct 20. A flow flowing into the duct 20 is accelerated from the upstream toward the downstream, the flow is rotated in a direction opposite from the rotating direction of the propeller 10 by the strut 20e having the twist, this flow flows into the propeller 10 as a counterflow, and the propeller efficiency is further enhanced.

It is possible to provide the strut 20e outside the duct 20, and a fixed blade which rotates the flow may be provided on an inner surface of the duct 20, but since the strut 20e rotates the flow, the strut 20e functions as the fixed blade, and a structure is simplified.

A twisting angle of the strut 20e as the fixed blade is increased toward the propeller 10. According to this, the propulsive efficiency is further enhanced.

A maximum twisting angle of the strut 20e as the fixed blade is set to 15 times or more and 25 times or less of a pitch ratio of the propeller 10. According to this, a flow at an outlet of the propeller 10 can be made as a less-twisted flow, and the propulsive efficiency is further be enhanced.

As shown in Fig. 3(d), a cross-section of the duct 20 may be a wing shape which swells inward. Further, a cross sectional shape of the strut 20e may be a wing shape as shown in Fig. 3(e). In this case, a twisting direction of the strut 20e may be wing shape selectively in upward or downward direction in accordance with the flow so that an effective effect is generated.

The cross-section of the duct 20 is formed as the wing shape which swells inward, and the cross sectional shape of the strut 20e is formed as the wing shape. According to this, it is possible to further increase the lifting force for moving the ship's hull 1 forward.

Fig. 4 shows pitch distributions of a decreasing pitch propeller and a normal propeller.

In the propeller 10, a radius of the boss 11 is r1, and the range of the blade root is r1 to r2. A radius R is 1/2 Dp, and H represents a pitch. The range of the blade root is 20% or more and 40% or less of the diameter Dp of the propeller 10.

The pitch H of the propeller 10 of this embodiment is a decreasing pitch in which the pitch H becomes the maximum at the blade root of the propeller 10 and the pitch H becomes the minimum value at the blade tip in the direction of radius R. Comparative example shown in Fig. 4 shows a constant pitch.

The pitch H of the propeller 10 of the embodiment becomes the maximum value Hmax at the range of the blade root (r1 to r2) of the propeller 10, and the maximum value Hmax is set to 120% or more and 160% or less of the minimum value Hmin of the pitch H while taking, into consideration, propulsion efficiency and suppression of occurring of cavitation.

Fig. 5 shows flow speed distributions of the propeller of the decreasing pitch according to the embodiment shown in Fig. 4 and a normal propeller as comparative example.

In Fig. 5, V represents flow speed on the inflow side of the propeller 10, Vx represents flow speed on the outflow side of the propeller 10, and both V and Vx show flow speed in the axial direction.

As shown in Fig. 5, in the embodiment, the flow speed distribution is enhanced when r1/R is 0.2 to 0.6 as compared with comparative example.

That is, in Fig. 5, since the pitch of the propeller 10 is the decreasing pitch, the flow speed distribution in the vicinity of the center (the range of the blade root) of the propeller 10 is improved, and this suggests that the duct 20 may be a small duct 20 having a small diameter Ddin. Since the duct 20 can be made small, it is possible to increase the flow speed of the range of the blade root of the propeller 10, the pitch of the propeller 10 in the range of the blade root is increased, and interference can be enhanced. Further, since the duct 20 which is light in weight and has low cost can be produced, and a surface area of the duct 20 is small, friction resistance can be reduced. Further, since the duct 20 is small in size, flow speed at the range of the blade root of the propeller 10 which is relatively slow in speed is increased. Therefore, it is possible to restrain cavitation from being occurred, and to prevent the propeller 10 from being damaged and it is possible to avoid vibration and noise of the propeller 10. Further, the pitch of the propeller 10 is the decreasing pitch in which the propeller pitch is reduced in the radial direction, the propeller pitch becomes the maximum at the range of the blade root and becomes the minimum at the blade tip. Therefore, it is also possible to suppress cavitation which is occurred at the blade tip of the propeller 10.

Fig. 6 shows a flow speed distribution when the distance L between the rear end 22 of the duct 20 and the front edge of the propeller 10 of the ship setting the small duct is changed.

When the distance L is 15% or less of the diameter Dp of the propeller 10, interference between the propeller 10 and the duct 20 appears remarkably, and if the distance L is made less than 10% of Dp, a load distribution in the direction of radius R of the propeller 10 is largely influenced. If the distance L is too long, the duct 20 abuts against the ship's hull 1. If the distance L is less than 10% of Dp, it is possible to prevent the duct 20 from abutting against the ship's hull 1, and it is possible to avoid a case where it becomes difficult to take in a flow from the entire of the front opening.

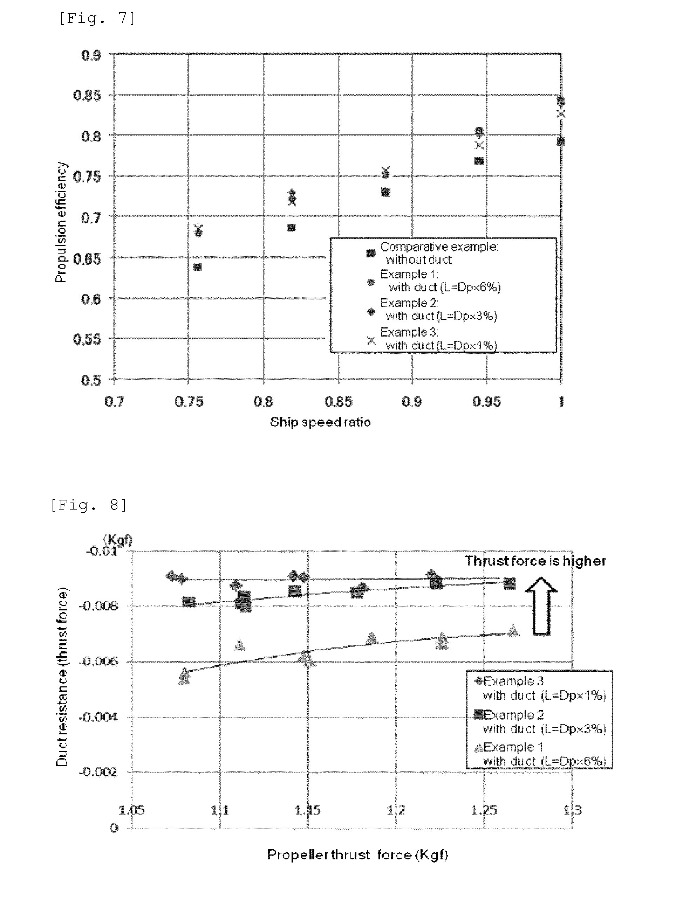

Figs. 7 and 8 show results of a propeller loading changing test in which decrease in speed of the ship during waves is simulated.

Fig. 7 is a graph showing the propulsion efficiency when the distance between the front edge of the propeller and the rear end of the duct is changed and when the duct is not provided. Fig. 8 is a graph showing the propulsion variation when the distance between the front edge of the propeller and the rear end of the duct is changed.

In this experiment, a tested ship is an Aframax tanker (Lpp (length between perpendicular lines) is 229 m, B (width of ship) is 42 m and D (depth of ship) is 12.19 m). A model ship of Lpp = 4.8600 m, B = 0.8914 m and D = 0.2587 m was used.

A propeller 10 of the tested ship had such sizes that Dp (diameter of propeller) is 7 m, H/D (0.7 R) (pitch position) is 0.67, EAR (expanded area ratio) is 0.45, Rake (inclination of blade) is -216.7 mm, Z (number of blades) is four, Boss Ratio is 0.1586, and Skew (warpage of blade) is 20 degrees. A propeller having such sizes that Dp is 0.148559 m, H/D (0.7 R) is 0.67, EAR is 0.45, Rake is -4.6 mm, Z is four, Boss Ratio is 0.1586 and Skew is 20 degrees was used as a model propeller.

According to the duct 20 used in the experiment, Ddin (diameter of front end 21) is 48% of Dp, Ddout (diameter of rear end 22) is 40% of Dp, length (width) W of duct 20 is 24% of Dp, and a camber ratio of duct blade is 8%.

In this experiment, to simulate decrease in speed of the ship during waves, a self-navigation test was carried out in a state where the speed of the ship was decreased while keeping the number of rotation was maintained constant, and a propeller loading of the propeller was increased.

In Fig. 7, a lateral axis shows a ship speed ratio, a vertical axis shows propulsion efficiency, and the propulsion efficiencies when the ship speed ratio is reduced to 0.75 are compared with each other.

In Example 1, the distance L between the front edge of the propeller 10 and the rear end 22 of the duct 20 is Dp × 6%. In Example 2, L is Dp × 3%. In Example 3, L is Dp × 1%. In comparative example, the duct 20 is not used.

In Examples 1 to 3, propulsion efficiencies are superior to that of comparative example in a range of the ship speed ratio from 0.75 to 1.

In Fig. 8, a lateral axis shows a propeller thrust force, a vertical axis shows duct resistance (thrust force), and thrust forces when the propeller thrust force is varied between 1.05 and 1.3 are compared with each other.

In Example 2, the thrust force is higher than that of Example 1, and the thrust force of Example 3 is higher than that of Example 2.

As shown in Fig. 8, the smaller the distance L between the front edge of the propeller 10 and the rear end 22 of the duct 20 is, the higher the thrust force becomes.

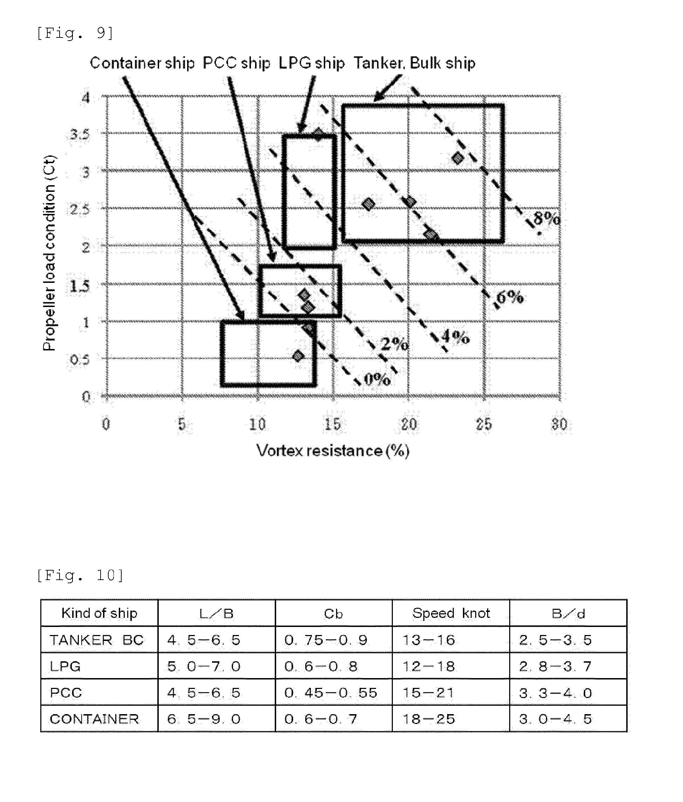

Fig. 9 shows a relation between a propeller load condition (Ct) and a vortex resistance (%) in actual sea with respect to the ship's hull. Fig. 10 is a diagram showing a relation of essential items of different kinds of ships.

Here, the propeller load condition (Ct) has the same meaning as the propeller loading and this is a numeric value obtained by dividing thrust force generated by the propeller by [dynamic pressure of water flow x an area of a propeller circular surface]. The vortex resistance is viscosity resistance as resistance of the ship's hull, and is viscosity resistance caused by vortex generated by a ship shape other than friction resistance of the ship's hull surface. More specifically, there are (viscosity) friction resistance and (viscosity) pressure resistance as the viscosity resistance, but the vortex resistance is resistance caused by vortex component of the (viscosity) pressure resistance.

If a flow line is twisted in a stern of a ship's hull, vortex having an axis in a longitudinal direction of the ship' s hull is generated, and a vortex resistance is generated as viscosity resistance. When shape influence expressing ship shape three-dimensional influence is divided into two, i.e., influence caused by thickening of the ship and influence caused by twisting of a flow line, the vortex resistance corresponds to the latter influence. If resistance of the ship's hull is reduced to the utmost limit, a flow line becomes the ship shape having no vortex extending along a local line, but resistance in this case becomes only the former resistance, and the vortex resistance is not generated. The vortex resistance is obtained by subtracting ship shape resistance having no vortex from the viscosity resistance.

The expression " a vortex resistance is OO%" means a rate of the vortex resistance to the entire resistance including wave-making resistance of a ship's hull.

The propeller load condition (Ct) and the vortex resistance also include expression of other physical amounts handling the same kinds of phenomenon.

In Fig. 9, a vertical axis shows the propeller load condition (Ct) of a propeller in actual sea, and a lateral axis shows a vortex resistance (%).

The propeller load condition (Ct) is T/(1/2ρV²Sp), T is a thrust force, ρ is density of water, V is flow speed on the inflow side of the propeller, and Sp is a disk area of the propeller.

In the case of a tanker and a bulk ship, the propeller load condition (Ct) is about 2 to 4 and a vortex resistance (%) is about 15 to 27. In the case of an LPG ship, the propeller load condition (Ct) is about 2 to 3.5 and a vortex resistance (%) is about 12 to 15. In the case of a PCC ship, the propeller load condition (Ct) is about 1 to 1.8 and a vortex resistance (%) is about 10 to 16. In the case of a container ship, the propeller load condition (Ct) is about 0.2 to 1 and the vortex resistance (%) is about 7 to 14.

Rhombic plots shown in Fig. 9 are water tank experiment data. In the experiment, a decreasing pitch propeller shown in Fig. 4 is used, a diameter of the duct is 20% or more and 50% or less of a diameter of the propeller, a distance between the rear end of the duct and the front edge of the propeller is 0.5% or more and less 10% of the diameter of the propeller. Chain lines shown in Fig. 9 show a horsepower reduction rate based on the water tank experiment data.

As shown in Fig. 9, in the case of the tanker and the bulk ship, the horsepower reduction rate is about 6%, and the horsepower reduction rate when the propeller load condition (Ct) is 3 or more and the vortex resistance (%) is 23 or more is 8%.

In the case of the LPG ship, the horsepower reduction rate is about 4% and in the case of the PCC ship, the horsepower reduction rate is about 2%.

Whereas, the container ship cannot obtain the horsepower reduction effect.

Values of the essential items of the tanker and the bulk ship, the LPG ship, the PCC ship and the container ship are as shown in Fig. 10. In Fig. 10, L represents a length between perpendicular lines, B represents a width of the ship, Cb represents a block coefficient or a fineness coefficient, and d represents draft of the ship.

From the above description, it can be found that in a ship's hull in which the propeller load condition (Ct) is 1.0 or more and a vortex resistance is 10% or more in actual sea, if diameter of the duct is set to 20% or more and 50% or less of the diameter of the propeller, horsepower of a ship's hull having a specific ship shape is reduced and there is an energy saving effect.

Especially from a relation between the vortex resistance and the propeller load condition, if a design method capable of specifying a ship's hull (kind of ship) to obtain the horsepower reduction effect is employed by applying a small duct of the embodiment, such a horsepower reduction effect in the LPG ship and the PCC ship that the propeller load condition (Ct) is 3.5 or less and the vortex resistance is 15% or less can be found in addition to the tanker and the bulk ship.

Conventionally, it was considered that even if a normal duct was applied to the LPG ship and the PCC ship, any effect could not be expected. However, if a duct is changed to the small duct in which a diameter of the duct is 20% or more and 50% or less of a diameter of the propeller and then a decreasing pitch propeller is used, the same effect can be expected also in these ships. When an anti-cavitation condition of a blade tip can be permitted, the pitch may be a decreasing pitch in which the pitch is reduced up to an intermediate portion of the propeller. Even in the case of a normal pitch propeller, if it is combined with a small duct, the effect in the LPG ship and the PCC ship can be expected as compared with the conventional duct although the horsepower reduction effect is slightly lowered.

When application of the small duct to a ship is determined, at first, concerning a ship to which the small duct is to be applied, a propeller load condition (Ct) and a vortex resistance in the actual sea are calculated from design, simulation, model experiment and the like. Next, it is determined whether the propeller load condition (Ct) is 1.0 or more and a vortex resistance is 10% or more, and whether the propeller load condition (Ct) is 3.5 or less and the vortex resistance is 15 % or less, and then, it is possible to determined whether the small duct can be applied and to estimate the horsepower reduction effect. Otherwise, at first, predetermined kinds of ships represented by Fig. 9 are applied to the relation between the propeller load condition (Ct) and the vortex resistance, and a kind of the ship is determined. Next, it is determined whether the propeller load condition (Ct) is 1.0 or more and the vortex resistance is 10% or more, and then, it is possible to determine whether the small duct can be applied and to estimate the horsepower reduction effect.

In this method, as optimization after application of the small duct to the ship is determined, all the elements and sizes of the ship are finely adjusted, and the small duct and the propeller are mainly optimized.

The small duct is designed such that its duct shape and its mounting position are devised or contrived so that the efficiency improving effect is further increased as compared with horizontal in the actual sea, and interference between the small duct and the propeller is further increased. Hence, it is necessary to design the propeller integrally with the duct.

First, a shape and size of the small duct in which wake of a ship's hull are taken into account are determined. This small duct is designed based on a condition that the small duct is brought close to the propeller and is operated at a place where suction function of the propeller is large. Hence, especially a rear edge of the duct is devised, and an interior of the duct is accelerated largely as compared with a case where there is no duct. Therefore, a pitch of the propeller must be designed such that the pitch near the roof of the conventional propeller is increased.

Next, the propeller is designed. As detailed design in which a pitch of the propeller is taken into account, it may be sufficient to determine a propeller shape utilizing interference of calculation between the duct and the propeller by vortex lattice method, but even with a simple design indication, it can be considered that it is possible to design a propeller having no problem in terms of a sufficiently practical meaning.

That is, a propeller is first designed by the conventional method, and when a pitch distribution of the propeller is changed, a plurality of kinds of patterns are applied by a predetermined kind of a ship are applied, and the pitch distribution is obtained.

Propeller characteristics are checked, and if there is inconvenience, the conditions are changed and the above-described calculation is repeated. Depending on circumstances, the procedure is returned up to the shape and size of the duct, and they are optimized.

In the case of an existing ship in which the propeller is already mounted, a relation between the small duct and the propeller is optimized. However, even if the ship is the existing ship, if optimization including exchange of the propeller is to be carried out, it is unnecessary to optimize the relation between the small duct and the propeller, and the small duct and the propeller should be optimized in the above-described manner.

The container ship, the PCC ship, the LPG ship, the tanker and the bulk ship shown in Fig. 9 are only examples of kinds of ships, and even if a ship is of a kind having another name, if this kind of ship corresponds to the vortex resistance and the propeller load condition (Ct) in terms of numeric values, the present invention of the application can be applied.

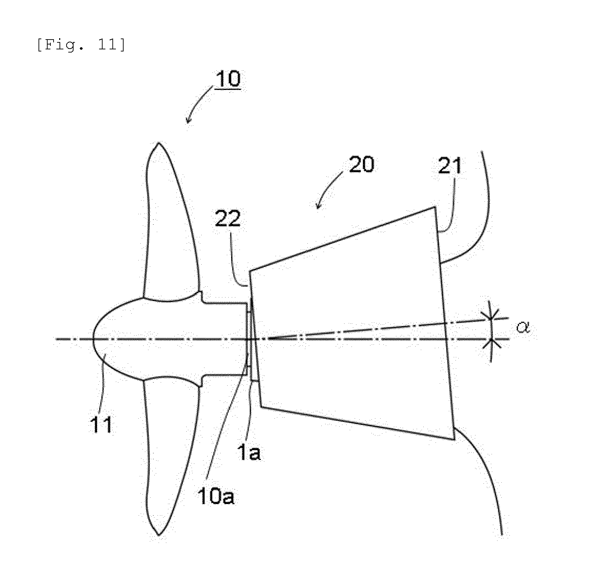

Fig. 11 is a side view showing essential portions of a ship setting the small duct according to another embodiment of the present invention.

Since basic configurations of a propeller 10 and a duct 20 in this embodiment are the same as those of the previous embodiment shown in Fig 2, explanation thereof will be omitted.

In this embodiment, a center line of the duct 20 is inclined from a center line of the propeller 10 by an angle α so that a front side (front end 21) of the duct 20 extends upward. Here, it is preferable that the angle α is 10° or less.

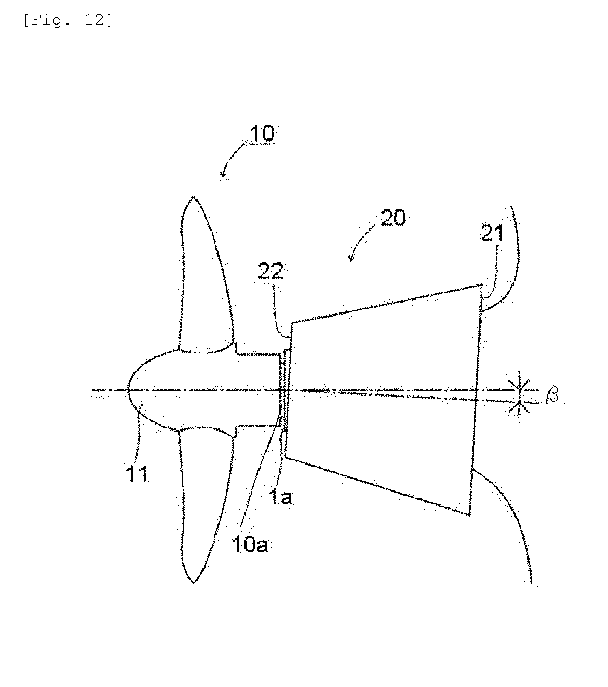

Fig. 12 is a side view showing essential portions of a ship setting the small duct according to another embodiment of the present invention.

Since basic configurations of a propeller 10 and a duct 20 in this embodiment are the same as those of the previous embodiment shown in Fig 2, explanation thereof will be omitted.

In this embodiment, a center line of the duct 20 is inclined from a center line of the propeller 10 by an angle β so that a front side (front end 21) of the duct 20 extends downward. Here, it is preferable that the angle β is 5° or less.

As in the embodiments shown in Figs. 11 and 12, the front side of the duct 20 is inclined upward by 10° or less and downward by 5° or less. Therefore, even if an axially symmetric duct which can relatively easily be produced is used, it is possible to obtain propulsion performance of almost the same level as the axially asymmetric duct in accordance with wake which differs depending each of hulls.

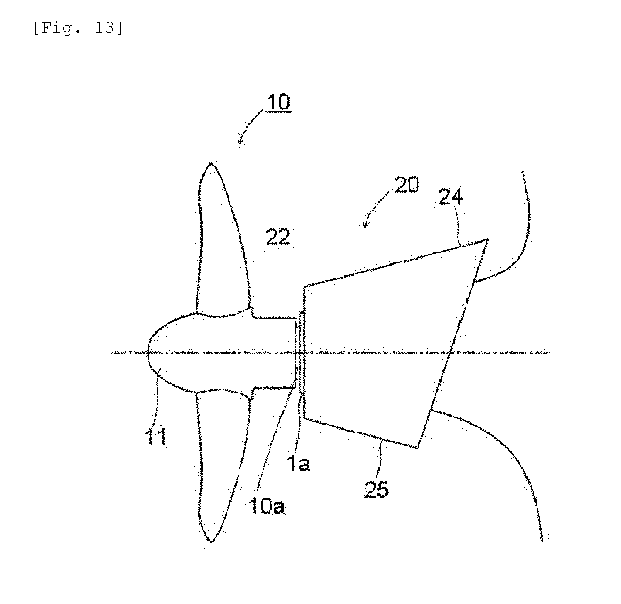

Fig. 13 is a side view showing essential portions of a ship setting the small duct according to another embodiment of the present invention.

Since basic configurations of a propeller 10 and a duct 20 in this embodiment are the same as those of the previous embodiment shown in Fig 2, explanation thereof will be omitted.

In this embodiment, the duct 20 is formed as a reversed trapezoidal shape in which an upper side 24 is longer than a lower side 25 as viewed from a side direction. According to this, it is possible to reduce drag which is generated at a lower end of the duct 20, and to enhance thrust force at an upper end of the duct 20.

If the upper side 24 of the duct 20 is set larger than one time and two times or less of a length of the lower side 25, it is possible to enhance the suction effect at a center portion of the propeller while reducing the drag and to enhancing the thrust force.

According to the ship setting a small duct, of the embodiment, which includes the propeller 10 mounted on the stern of the ship's hull 1 and the duct 20 mounted in front of the propeller 10, since the duct 20 is combined with the decreasing pitch propeller 10, the duct 20 can be made small, the diameter Ddin of the duct 20 can be made 20% or more and 50% or less of the diameter Dp of the propeller 10, and it is possible to bring the duct 20 close to the propeller 10 without occurring cavitation. BY applying the duct to a tanker, a bulk ship, an LPG ship or a PCC ship for example in which the propeller load condition (Ct) is 1.0 or more and a vortex resistance is 10% or more in an actual sea, it is possible to enhance the suction effect at the center portion of the propeller 10 in the actual sea where a propeller loading of the propeller 10 is increased by the wind and waves, the load distribution in the radial direction of the propeller 10 which governs the efficiency is optimized by utilizing interference with respect to the duct 20.

According to the ship setting the small duct of the present embodiment, it is possible to obtain a horsepower reduction effect in an LPG ship and a PCC ship in which a propeller load condition (Ct) is 3.5 or less and a vortex resistance is 15% or less.

According to the ship setting the small duct of this embodiment, since the duct 20 is combined with the decreasing pitch propeller 10, the duct 20 can be made compact. The diameter Ddin of the duct 20 is set to 20% or more and 50% or less of the diameter Dp of the propeller 10, and the duct 20 can be brought close to the propeller 10 without occurring cavitation. The pitch of the propeller is made as the decreasing pitch. Hence, in the actual sea where a load degree of the propeller is increased by the wave and wind, it is possible to enhance the suction effect at the center portion of the propeller, and it is possible to optimize a load distribution in the radial direction of the propeller which governs efficiency utilizing interference with respect to the duct.

According to the ship setting the small duct of the embodiment, a value of the pitch H becomes the maximum value Hmax at the range of the blade root of the propeller 10, and the maximum value Hmax of the pitch H is set to 120% or more and 160% or less of the minimum value Hmin of the pitch H. According to this, cavitation which occurs at the propeller blade tip is suppressed, the suction effect at the center portion of the propeller 10 is enhanced to optimize the load distribution, and the propulsion efficiency can be enhanced.

According to the ship setting the small duct of the embodiment, the distance L between the rear end 22 of the duct 20 and the front edge of the propeller 10 is set to 0.5% or more and less than 10% of the diameter Dp of the propeller 10. According to this, the front end 21 of the duct is prevented from coming into contact with the ship's hull 1 of the stern, a flow is taken in from the entire of a front opening of the duct 20, and the interference effect between the duct 20 and the propeller 10 can be enhanced.

According to the ship setting the small duct of the embodiment, the cross sectional shape of the duct 20 is formed as the convex shape 23 which swells inward, a projecting degree of the convex shape 23 is greater on the upstream side of the duct 20, and the camber ratio is set to 6% or more and 16% or less. Therefore, a flow on the upstream side where the average speed is slow can be accelerated, increase in resistance is suppressed, and the suction effect at the center portion of the propeller 10 can further be enhanced. In this case, even if the camber ratio is set high, i.e., 6% or more and 16% or less by the suction effect, it is possible to increase the lift force for driving the ship's hull 1 forward without generating the separation.

According to the ship setting the small duct of the embodiment, the duct 20 is formed as the acceleration type duct in which the inner diameter on the downstream side is smaller than the inner diameter on the upstream side. According to this, a flow can be accelerated, and the suction effect at the center portion of the propeller 10 can further be enhanced.

According to the ship setting the small duct of the embodiment, the center of the duct 20 matches with the axis of the propeller 10. Therefore, it is possible to easily produce and install the duct 20 and to inexpensively provide the duct 20.

According to the ship setting the small duct of the present embodiment, a front portion of a center line of the duct is inclined from a center line of the propeller upward by 10° or less and downward by 5° or less. Hence, even if an axially symmetric duct which can relatively easily be produced is used, it is possible to obtain propulsion performance of almost the same level as the axially asymmetric duct in accordance with wake which differs depending upon each of hulls.

According to the ship setting the small duct of the present embodiment, the inner surface of the duct 20 has the fixed blade which forms a flow into the propeller 10 as a counterflow. According to this, a flow which flows into the duct 20 flows into the propeller 10 as a counterflow by the fixed blade and hence, it is possible to further enhance the propeller efficiency.

According to the ship setting the small duct of the present embodiment, since the fixed blade is twisted in a direction opposite from the rotation direction of the propeller 10, the fixed blade rotates the flow, and the propulsive efficiency is enhanced.

According to the ship setting the small duct of the present embodiment, a twisting angle of the fixed blade becomes larger toward the propeller 10 and thus, the propulsive efficiency is further enhanced.

According to the ship setting the small duct of the present embodiment, the maximum twisting angle of the fixed blade is set to 15 times or more and 25 times or less of the pitch ratio of the propeller 10. According to this, a twisting of a flow at an outlet of the propeller 10 can be reduced, and the propulsive efficiency is further enhanced.

According to the ship setting the small duct of the present embodiment, since the struts 20a, 20b, 20c and 20d which mount the duct on the stern also function as fixed blades, a structure is simplified.

According to the ship setting the small duct of the present embodiment, the duct 20 is formed as the reversed trapezoidal shape in which the upper side 24 is longer than the lower side 25 as viewed from a side direction. Hence, drag generated at a lower end of the duct 20 can be reduced, and thrust force at an upper end of the duct 20 can be enhanced.

According to the ship setting the small duct of the present embodiment, the upper side 24 of the duct 20 is set than one time and two times or less of a length of the lower side 25, it is possible to enhance the suction effect at a center portion of the propeller while reducing the drag and enhancing the thrust force.

As each of the ducts in the embodiments, the duct is provided on the entire periphery of the diameter, the idea of the present invention can also be applied to a duct having such a shape that a portion of the entire periphery is cut while leaving a portion of the duct which effectively functions as the duct.

### [INDUSTRIAL APPLICABILITY]

According to the ship setting the small duct of the present invention, the propeller is small in size and light in weight, and has small friction resistance, low vibration and low noise and low cost, and it is possible to enhance the propulsive efficiency. Therefore, the present invention can be applied not only to a tanker and a bulk ship in which propeller load condition (Ct) is 2.0 or more and a vortex resistance is 15 or more, but also to an LPG ship and a PCC ship in which the propeller load condition (Ct) is 1 or more and 3.5 or less and the vortex resistance is 10% or more and 15% or less.

### [EXPLANATION OF SYMBOLS]

- 1: ship's hull
- 1a: ship's hull end
- 10: propeller
- 10b: stern tube
- 11: boss
- 20: duct
- 20a, 20b, 20c, 20d: strut (fixed blade)
- Dp: diameter of propeller
- Ddin: diameter of front edge of duct
- Ddout: diameter of rear end of duct
- H: pitch
- L: distance between rear end of duct and front edge of propeller

## Claims

1. A ship setting a small duct includes a propeller mounted on a stern of a ship's hull and a duct provided in front of the propeller, wherein
a propeller load condition of the ship' s hull in an actual sea is set to 1.0 or more and a vortex resistance of the ship's hull in the actual sea is set to 10% or more, the duct is a small duct, and a diameter of the duct is set to 20% or more and 50% or less of a diameter of the propeller.

2. The ship setting the small duct according to claim 1, wherein the propeller load condition of the ship's hull is set to 3.5 or less, and the vortex resistance of the ship's hull is set to 15% or less.

3. The ship setting the small duct according to claim 1 or 2, wherein a pitch of the propeller is set to a decreasing pitch which is reduced in a radial direction.

4. The ship setting the small duct according to claim 3, wherein a value of the pitch becomes a maximum value at a range of a blade root of the propeller, and the maximum value of the pitch is set to 120% or more and 160% or less of a minimum value of the pitch.

5. The ship setting the small duct according to any one of claims 1 to 4, wherein a distance between a rear end of the duct and a front edge of the propeller is set to 0.5% or more and less than 10% of the diameter of the propeller.

6. The ship setting the small duct according to any one of claims 1 to 5, wherein a cross sectional shape of the duct is formed as a convex shape which swells inward, a projecting degree of the convex shape is greater on an upstream side of the duct, and a camber ratio is set to 6% or more and 16% or less.

7. The ship setting the small duct according to any one of claims 1 to 6, wherein the duct is an acceleration type duct in which an inner diameter of the duct on its downstream side is smaller than an inner diameter of the duct on its upstream side.

8. The ship setting the small duct according to any one of claims 1 to 7, wherein a center line of the duct matches with a center line of the propeller.

9. The ship setting the small duct according to any one of claims 1 to 7, wherein a front portion of a center line of the duct is inclined from a center line of the propeller upward by 10° or less and downward by 5° or less.

10. The ship setting the small duct according to any one of claims 1 to 9, wherein an inner surface of the duct has a fixed blade which forms a flow toward the propeller as a counterflow.

11. The ship setting the small duct according to claim 10, wherein the fixed blade is twisted in a direction opposite from a rotation direction of the propeller.

12. The ship setting the small duct according to claim 11, wherein a twisting angle of the fixed blade becomes larger toward the propeller.

13. The ship setting the small duct according to claim 11 or 12, wherein a maximum twisting angle of the fixed blade is set to 15 times or more and 25 times or less of a pitch ratio of the propeller.

14. The ship setting the small duct according to any one of claims 10 to 13, wherein a strut which mounts the duct on the stern also functions as the fixed blade.

15. The ship setting the small duct according to any one of claims 1 to 14, wherein the duct is formed as a reversed trapezoidal shape in which its upper side is longer than its lower side as viewed from a side direction.

16. The ship setting the small duct according to claim 15, wherein the upper side of the duct is set than one time and two times or less of a length of the lower side.

17. The ship setting the small duct according to any one of claims 1 to 16, wherein the duct is mounted on an existing ship at a later stage.

18. A determination method for applying a small duct to a ship for determining whether the small duct should be applied to the ship, wherein
a propeller load condition and a vortex resistance of the ship in an actual sea are calculated, or
a predetermined kind of the ship is applied to a relation between the propeller load condition and the vortex resistance, and
if the propeller load condition is 1.0 or more and the vortex resistance is 10% or more, the small duct is applied to the ship.
